# EUROPÄISCHE PATENTANMELDUNG

(11) **EP 3 890 357 A1**
(43) Veröffentlichungstag der Anmeldung: **06.10.2021**
(21) Anmeldenummer: 21158828.0
(22) Anmeldetag: 23.02.2021
(51) Int. Cl.: H04R 25/00

(54) **VERFAHREN ZUM BETRIEB EINES HÖRSYSTEMS SOWIE HÖRSYSTEM**

(30) Priorität: 02.04.2020 DE 102020204332
(71) Anmelder: Sivantos Pte. Ltd., Singapore 539775 (SG)
(72) Erfinder: PISCHEL, Judith, 90419 Nürnberg (DE)
(74) Vertreter: FDST Patentanwälte

(57) **Zusammenfassung**

Es wird ein Verfahren zum Betrieb eines Hörsystems (2) angegeben, wobei das Hörsystem (2) ein Hörgerät (4) aufweist, welches von einem Nutzer (N) getragen wird, wobei das Hörsystem (2) ein Zusatzgerät (6) aufweist, welches eine Kamera (8) aufweist, mittels welcher von einer aktuellen Umgebung (U) ein Echtzeitbild (E) aufgenommen wird, wobei das Zusatzgerät (6) einen Bildschirm (10) aufweist, auf welchem das Echtzeitbild (E) ausgegeben wird, sodass die Umgebung (U) auf dem Bildschirm (10) dargestellt wird, wobei das Hörgerät (4) an das Zusatzgerät (6) eine Information (I) übermittelt, welche mit einem Teilbereich (T) der Umgebung (U) verknüpft ist und somit eine Information (I) zu diesem Teilbereich (T) ist, wobei die Information (I) ebenfalls auf dem Bildschirm (10) dargestellt wird, indem ein Bildelement (B) erzeugt wird und mit dem Echtzeitbild (E) derart überlagert wird, dass für den Nutzer (N) erkennbar ist, mit welchem Teilbereich (T) der Umgebung (U) die Information (I) verknüpft ist. Außerdem werden ein Hörsystem (2) und ein Computerprogrammprodukt angegeben.

## Beschreibung

Die Erfindung betrifft ein Verfahren zum Betrieb eines Hörsystems sowie ein entsprechendes Hörsystem.

Ein Hörsystem weist ein Hörgerät auf, welches von einem Nutzer am oder im Ohr getragen wird. Das Hörgerät nimmt Geräusche aus der Umgebung mittels eines oder mehrerer Mikrofone auf und erzeugt dabei elektrische Eingangssignale, welche über einen Hörer des Hörgeräts wieder in Geräusche umgewandelt und an den Nutzer ausgegeben werden. Die elektrischen Eingangssignale werden mittels einer Signalverarbeitung zu elektrischen Ausgangssignalen für den Hörer verarbeitet, um das Hörerlebnis und die Wahrnehmung der Geräusche an die persönlichen Bedürfnisse des Nutzers anzupassen. Typischerweise dient ein Hörgerät zur Versorgung eines hörgeschädigten Nutzers, d.h. zum Ausgleich eines Hördefizits des Nutzers. Die Signalverarbeitung verarbeitet die elektrischen Eingangssignale dann derart, dass das Hördefizit ausgeglichen wird. Weiter weist ein Hörsystem oftmals ein Zusatzgerät auf, welches mit dem Hörgerät verbunden ist, um Daten auszutauschen.

Beispielsweise ist in der EP 3 120 578 B1 ein System mit einer Empfehlungs-Engine beschrieben, welche über eine mobile Vorrichtung mit einer Hörhilfevorrichtung kommunizieren kann.

In der EP 2 928 214 A1 ist ein binaurales Hörassistenzsystem beschrieben, mit zwei Hörassistenzgeräten und mit einem Nutzer-Interface, welches mit den Hörassistenzgeräten kommunizieren kann.

Die US 9,669,296 B1 beschreibt ein Verfahren zur Bereitstellung eines Spiels mit paralleler Realität. Es werden ein System und ein Verfahren beschrieben, um einer Aktivität in der realen Welt mit einer ortsbasierten parallelen Spielrealität zu verknüpfen.

Die US 9,539,498 B1 beschreibt ein Verfahren, zum Abbilden von Aktionen in der realen Welt auf eine virtuelle Welt mit einer parallelen Spielrealität. Die virtuelle Welt weist Erlebnisse auf, welche durch Aktionen in der realen Welt beeinflusst werden.

Vor diesem Hintergrund ist es eine Aufgabe der Erfindung, den Betrieb eines Hörsystems zu verbessern und für einen Nutzer möglichst intuitiv zu gestalten. Der Betrieb eines Hörsystems und speziell eines Hörgeräts soll für den Nutzer möglichst aufwandsarm sein.

Die Aufgabe wird erfindungsgemäß gelöst durch ein Verfahren mit den Merkmalen gemäß Anspruch 1, durch ein Hörsystem mit den Merkmalen gemäß Anspruch 14 sowie durch ein Computerprogrammprodukt mit den Merkmalen gemäß Anspruch 15. Vorteilhafte Ausgestaltungen, Weiterbildungen und Varianten sind Gegenstand der Unteransprüche. Die Aufgabe wird weiterhin insbesondere jeweils eigenständig gelöst durch ein Hörgerät und durch ein Zusatzgerät, welche jeweils zur Durchführung des Verfahrens ausgebildet sind. Die Ausführungen im Zusammenhang mit dem Verfahren gelten sinngemäß auch für das Hörsystem, das Computerprogrammprodukt, das Hörgerät sowie das Zusatzgerät und umgekehrt. Sofern nachfolgend Verfahrensschritte des Verfahrens beschrieben werden, ergeben sich vorteilhafte Ausgestaltungen für das Hörsystem, das Hörgerät und das Zusatzsystem insbesondere dadurch, dass dieses ausgebildet ist, einen oder mehrere dieser Verfahrensschritte auszuführen.

Das Verfahren dient zum Betrieb eines Hörsystems. Das Hörsystem weist ein Hörgerät auf, welches von einem Nutzer getragen wird. Weiter weist das Hörsystem ein Zusatzgerät auf, welches eine Kamera aufweist, mittels welcher von einer aktuellen Umgebung ein Echtzeitbild aufgenommen wird. Das Zusatzgerät weist einen Bildschirm auf, auf welchem das Echtzeitbild ausgegeben wird, sodass die Umgebung insbesondere in Echtzeit auf dem Bildschirm dargestellt wird. Damit dient das Verfahren insbesondere auch zum Betrieb des Hörgeräts und des Zusatzgeräts. Die Umgebung ist real und somit eine Realität, das Echtzeitbild ist ein Abbild dieser Realität.

Ein Kern der Erfindung ist insbesondere die Erzeugung einer erweiterten Realität (auch als "augmented reality" bezeichnet) auf dem Zusatzgerät durch eine Verknüpfung der Umgebung mit Informationen, d.h. Daten, vom Hörgerät. Hierzu übermittelt das Hörgerät an das Zusatzgerät eine Information, welche mit einem Teilbereich der Umgebung verknüpft ist und somit eine Information zu diesem Teilbereich ist. Die Information wird dann auf dem Bildschirm dargestellt, indem ein Bildelement erzeugt wird und mit dem Echtzeitbild derart überlagert wird, dass für den Nutzer erkennbar ist, mit welchem Teilbereich der Umgebung die Information verknüpft ist. Die Information vom Hörgerät wird somit als ein virtuelles Bild in ein Abbild der realen Umgebung projiziert. Daraus ergibt sich der Vorteil, dass dem Nutzer auf dem Bildschirm die Beziehung zwischen der Umgebung und den Informationen vom Hörgerät verdeutlicht wird und weiterhin dem Nutzer ein besonders intuitiver Zugang zum Verständnis des Betriebs des Hörgeräts ermöglicht wird.

Unter "verknüpft" wird insbesondere verstanden, dass die Information eine Eigenschaft oder einen Aspekt des Teilbereichs oder eines Objekts darin beschreibt oder eine Einstellung des Hörgeräts zur Interaktion mit dem Teilbereich oder einem Objekt darin. Mit anderen Worten: die Information ist allgemein eine Umgebungs- oder Hörgerätinformation und gibt insbesondere an, wie das Hörgerät ein Schallsignal aus einem Teilbereich der Umgebung bewertet (Umgebungsinformation) oder verarbeitet (Hörgerätinformation). Die Information ist z.B. eine konkreter Wert eines Betriebsparameters des Hörgeräts und dann eine Hörgerätinformation oder ein Wert einer Eigenschaft eines Teilbereichs der Umgebung, speziell eines Schallsignals aus diesem Teilbereich, und dann eine Umgebungsinformation.

Die konkrete Ausgestaltung der Information ist aber an sich zunächst nicht relevant, wichtiger ist, dass die Information in bestimmter Weise auf dem Bildschirm dargestellt wird, nämlich nicht einfach als bloße Daten ohne Bezug zur Umgebung, sondern als eine Überlagerung derart, dass die Information im Echtzeitbild visuell demjenigen Teilbereich der Umgebung zugeordnet ist, welcher mit der Information verknüpft ist. Hierzu wird die Information zur Darstellung in ein Bildelement übersetzt, welches mit dem Echtzeitbild überlagert wird, sodass auf dem Bildschirm eine erweiterte Realität dargestellt wird, bei welcher das Echtzeitbild die Realität ist und das Bildelement, d.h. die Information, eine Erweiterung dieser Realität. In diesem Sinne ist das Echtzeitbild real, da dessen Elemente von der Kamera erfasst werden, und das Bildelement virtuell, da dieses nicht von der Kamera erfasst wird, sondern zusätzlich erzeugt wird, vorzugsweise von einer Steuereinheit des Zusatzgeräts.

Die Umgebung ist üblicherweise in mehrere Teilbereiche unterteilt, sodass entsprechend auch das Echtzeitbild in mehrere Bildteile unterteilt, wobei jeder Bildteil einen Teilbereich darstellt und umgekehrt. Ein jeweiliger Teilbereich ist beispielsweise ein Raumbereich, welcher von einem Objekt, z.B. einer Person, eingenommen wird, oder ein Winkel- oder Raumwinkelbereich, z.B. ist die Umgebung ausgehend vom Nutzer in mehrere Winkelbereiche unterteilt, oder der Teilbereich ist ein sonstwie zumindest teilweise begrenzter Bereich der Umgebung. Die genaue Abgrenzung des Teilbereichs gegenüber der übrigen Umgebung ist insbesondere abhängig von der Art der Information.

Das Bildelement ist geeigneterweise eine Markierung, welche auf den Teilbereich zeigt oder in oder an diesem angezeigt wird, z.B. ein Symbol, ein Icon, ein Pfeil, ein Kreuz, ein Kreis, eine Linie oder dergleichen. Alternativ ist das Bildelement ein Textelement im oder am Teilbereich, ein Rahmen um den Teilbereich herum, eine Umrandung des Teilbereichs, eine Färbung, Transparenz, Bildschärfe oder Kontrast desjenigen Teils des Echtzeitbildes, welcher den Teilbereich zeigt, oder Linien zum Markieren des Teilbereichs. Geeignet sind auch Kombinationen der vorgenannten Ausgestaltungen. Die konkrete Ausgestaltung des Bildelements ist insbesondere abhängig von der Art der Information, welche dargestellt wird.

Ein Ausgangspunkt der Erfindung ist insbesondere die Beobachtung, dass ein Hörgerät üblicherweise ein oder mehrere Bedienelemente aufweist, mittels welchen sich ein oder mehrere Betriebsparameter des Hörgeräts vom Nutzer einstellen lassen. Beispiele für solche Betriebsparameter sind ein Verstärkungsfaktor des Hörgeräts, eine Ausrichtung oder eine Breite einer Richtkeule eines Richtmikrofons des Hörgeräts zur räumlichen Fokussierung und dergleichen. Beispiele für Bedienelemente sind Schalter, Taster, Rädchen und Kippschalter. Alternativ oder zusätzlich ist ein Betriebsparameter über ein separates Zusatzgerät einstellbar, z.B. mittels eines Smartphones.

Ein weiterer Ausgangspunkt der Erfindung ist insbesondere die Beobachtung, dass zur Demonstration eines Hörgeräts und dessen Funktionsumfang im Betrieb z.B. im Rahmen einer Produktpräsentation sogenannte Demo-Apps verwendet werden, um einem potentiellen Nutzer den Betrieb des Hörgeräts in unterschiedlichen Situationen zu demonstrieren.

Die Einstellung von Betriebsparametern ist durch Bedienelemente am Hörgerät selbst aufgrund der Größe des Hörgeräts typischerweise nur eingeschränkt möglich und auch nicht unbedingt intuitiv, da die Auswirkungen einer Änderung nicht unmittelbar sichtbar sind. Auch eine Rückmeldung an den Nutzer, wie ein oder mehrere Betriebsparameter zum aktuellen Zeitpunkt eingestellt sind ist nur eingeschränkt möglich und für den Nutzer nicht unbedingt komfortabel oder verständlich.

Im Vergleich zu einem Bedienelement am Hörgerät bietet ein Zusatzgerät zur Einstellung von Betriebsparametern einen erhöhten Komfort und verbesserten Umfang und über eine Anzeige auch eine umfangreichere Rückmeldung. Speziell bei einem Smartphone als Zusatzgerät ist mittels eines Computerprogrammprodukts, z.B. einer App, welches auf dem Zusatzgerät läuft, vorteilhafterweise eine verbesserte Einstellung und Überwachung des Betriebs des Hörgeräts ermöglicht. Das Zusatzgerät zeigt auf einem Bildschirm beispielsweise an, welches von mehreren Betriebsprogrammen des Hörgeräts aktiviert ist oder ermöglicht die Einstellung eines Betriebsparameters, z.B. eines räumlichen Fokus, und dadurch auf einfache Weise auch eine Demonstration des Funktionsumfangs eines Hörgeräts.

Nachteilig ist dabei allerdings, dass weiterhin eine Beziehung zur tatsächlichen Umgebung fehlt. Die Einstellungen und das Verhalten des Hörgeräts im Betrieb sind nicht direkt mit der Umgebung des Nutzers verknüpft und die Interaktion des Hörgeräts mit der Umgebung im Betrieb ist für den Nutzer nicht mühelos erkennbar. Mit anderen Worten: der Nutzer muss immer eine gewisse Denkanstrengung unternehmen, um die vorgenommenen Einstellungen und deren Auswirkungen mit der tatsächlichen Umgebung zu verknüpfen. Beispielsweise wird dem Nutzer auf dem Zusatzgerät zwar angezeigt, dass eine Richtkeule des Hörgeräts in einem bestimmten Winkel z.B. relativ zur Blickrichtung ausgerichtet ist, diese Information steht jedoch nicht in unmittelbarer Beziehung mit der Umgebung, sodass für den Nutzer nicht erkennbar ist, welcher Teilbereich der Umgebung hiervon betroffen ist.

Vorliegend wird nun in vorteilhafter Weise dem Nutzer eine Verknüpfung einer Information mit einem Teilbereich der Umgebung auch tatsächlich angezeigt, nämlich über die erweiterte Realität auf dem Bildschirm. Die Information wird vorteilhaft dabei derart angezeigt und mit dem Echtzeitbild, d.h. dem Abbild der tatsächlichen Umgebung, überlagert, dass für den Nutzer unmittelbar und intuitiv, d.h. insbesondere ohne Denkanstrengung erkennbar ist, in welcher Beziehung die Information mit der Umgebung steht.

Das Hörgerät dient vorzugsweise zur Versorgung eines hörgeschädigten Nutzers. Hierzu weist das Hörgerät zumindest ein Mikrofon auf, welches Schall aus der Umgebung aufnimmt und ein elektrisches Eingangssignal erzeugt. Dieses wird zur Modifikation einer Signalverarbeitung des Hörgeräts zugeführt. Die Signalverarbeitung ist vorzugsweise ein Teil der Steuereinheit. Die Modifikation erfolgt insbesondere anhand eines individuellen Audiogramms des Nutzers, welcher dem Hörgerät zugeordnet ist, sodass ein individuelles Hördefizit des Nutzers ausgeglichen wird. Die Signalverarbeitung gibt als Ergebnis ein elektrisches Ausgangssignal aus, welches dann über einen Hörer des Hörgeräts wieder in Schall umgewandelt wird und an den Nutzer ausgegeben wird.

Vorzugsweise ist das Hörgerät ein binaurales Hörgerät, mit zwei Einzelgeräten, welche jeweils zumindest ein Mikrofon und einen Hörer aufweisen und welche vom Nutzer auf unterschiedlichen Seiten des Kopfs getragen werden, nämlich einmal am oder im linken Ohr und einmal am oder im rechten Ohr. Abseits von einem solchen binauralen Hörgerät ist auch eine Ausgestaltung möglich und geeignet, bei welcher das Hörgerät zwei Einzelgeräte wie beschrieben aufweist, von welchen jedoch lediglich eines einen Hörer aufweist und das andere nicht.

Das Zusatzgerät ist vorzugsweise ein einzelnes Gerät, in welchem die Kamera und der Bildschirm zusammengefasst sind. In einer geeigneten Ausgestaltung hierzu ist das Zusatzgerät ein Smartphone. Alternativ ist aber auch eine Ausgestaltung geeignet, bei welcher das Zusatzgerät die Kamera und den Bildschirm als zwei separate Geräte aufweist.

Zur Übermittlung der Information weisen das Hörgerät und das Zusatzgerät jeweils eine Schnittstelle zur Datenübertragung auf, z.B. eine Bluetooth-Schnittstelle, und sind über diese Schnittstellen miteinander verbunden oder gekoppelt. Bei der Datenübertragung wird dann zumindest die Information vom Hörgerät zum Zusatzgerät übertragen.

Zweckmäßigerweise wird eine relative Lage des Hörgeräts und des Zusatzgeräts zueinander bestimmt um auf diese Weise die Verknüpfung der Information mit dem Teilbereich besonders genau wiedergeben zu können. Beispielsweise wird die jeweilige Position des Hörgeräts und des Zusatzgeräts mittels geeigneter Sensoren, z.B. eines Gyroskops, eines Magnetfeldsensors, eines Beschleunigungssensors oder eines GPS-Systems, ermittelt und anhand dessen die relative Lage bestimmt. Zur Verbesserung der Genauigkeit wird geeigneterweise die jeweilige Ausrichtung des Hörgeräts und des Zusatzgeräts z.B. mittels geeigneter Sensoren, z.B. Beschleunigungssensoren, gemessen. Grundsätzlich ist aber auch eine Ausgestaltung geeignet, bei welcher die relative Lage ohne zusätzliche Messung geschätzt wird. Beispielsweise wird einfach vorausgesetzt, dass die Kamera in Übereinstimmung mit der Blickrichtung des Nutzers ausgerichtet ist und/oder die Position des Nutzers wird gleichgesetzt mit der Position der Kamera. Alternativ wird beispielsweise bei einem Smartphone als Zusatzgerät davon ausgegangen, dass der Nutzer dieses im Abstand weniger 10 cm vor sich und etwa auf Augenhöhe hält, sodass dann davon ausgegangen wird, dass sich das Zusatzgerät z.B. 20 cm in Blickrichtung vor dem Hörgerät befindet und die Kamera in Blickrichtung ausgerichtet ist. Für das Hörgerät wird davon ausgegangen, dass dieses in oder an einem oder beiden Ohren des Nutzers getragen wird.

In einer vorteilhaften Ausgestaltung ist die Information ein Vorhandensein einer Schallquelle in dem Teilbereich. Das Hörgerät erkennt das Vorhandensein der Schallquelle und übermittelt dies an das Zusatzgerät, zur Darstellung in dem Echtzeitbild. In dem Echtzeitbild markiert das Bildelement dann den Teilbereich, um in diesem das Vorhandensein der Schallquelle anzuzeigen. Dadurch ist für den Nutzer auf dem Bildschirm unmittelbar erkennbar, wo in der Umgebung das Hörgerät eine Schallquelle erkennt. Wie das Hörgerät die Schallquelle erkennt ist zunächst unwesentlich. Zur Erkennung einer Schallquelle weist das Hörgerät zweckmäßigerweise eine entsprechend ausgebildete Analyseeinheit auf, z.B. als Teil einer Steuereinheit des Hörgeräts.

Das Hörgerät erkennt zweckmäßigerweise nicht lediglich das bloße Vorhandensein einer Schallquelle, sondern auch deren Position, insbesondere relativ zum Hörgerät, also den Teilbereich, in welchem sich die Schallquelle befindet. Auch diese Position wird zweckmäßigerweise an das Zusatzgerät übermittelt, sodass dieses das Vorhandensein an der entsprechenden Position im Echtzeitbild anzeigt. Das Bildelement zur Darstellung des Vorhandenseins einer Schallquelle in einem bestimmten Teilbereich ist beispielsweise ein Pfeil oder ein Rahmen.

Zusätzlich bestimmt das Hörgerät vorteilhafterweise auch eine Klasse der Schallquelle, d.h. welcher Art die Schallquelle ist. Hierzu weist das Hörgerät beispielsweise einen Klassifikator auf, z.B. als Teil der Steuereinheit. Das Eingangssignal des Mikrofons wird dem Klassifikator zugeführt und dort klassifiziert. Auch die Klasse ist eine Information, welche zweckmäßigerweise an entsprechender Stelle im Echtzeitbild angezeigt wird. Zur Darstellung der Klasse einer Schallquelle ist besonders ein Symbol oder ein Textelement geeignet.

In einer geeigneten Ausgestaltung ist die Schallquelle ein Gesprächspartner des Nutzers und wird als solcher im Echtzeitbild mittels des Bildelements markiert. Mit anderen Worten: die Schallquelle weist eine Klasse auf, welche vom Hörgerät als "Gesprächspartner" erkannt wird und dann vom Zusatzgerät angezeigt wird. Dadurch ist über den Bildschirm für den Nutzer sofort erkennbar, wo das Hörgerät in der Umgebung einen Gesprächspartner identifiziert hat.

In einer vorteilhaften Ausgestaltung wird in dem Echtzeitbild ein Winkel angezeigt, in welchem sich die Schallquelle relativ zur Blickrichtung des Nutzers befindet. Beispielsweise wird der Winkel als Paar von zwei Linien oder Pfeilen dargestellt, eine in Blickrichtung und eine weitere vom Nutzer zur Schallquelle hin. Alternativ oder zusätzlich wird der Winkel einfach als Zahl derart in der Nähe der Schallquelle angezeigt, dass der Winkel für den Nutzer möglichst eindeutig dieser Schallquelle zugeordnet ist.

In einer vorteilhaften Ausgestaltung ist die Information ein Signal-zu-Rauschverhältnis, kurz SNR, des Teilbereichs. Das Hörgerät misst das SNR in dem Teilbereich, z.B. mittels einer Analyseeinheit als Teil der Steuereinheit. Das SNR wird dann als Information zur Darstellung in dem Echtzeitbild an das Zusatzgerät übermittelt. Das Bildelement gibt dann das SNR an, genauer gesagt das SNR für den Teilbereich. Entsprechend wird zweckmäßigerweise das SNR jeweils separat für mehrere unterschiedliche Teilbereiche gemessen und dadurch auf dem Bildschirm dann dem Echtzeitbild sozusagen eine SNR-Karte überlagert, sodass der Nutzer unmittelbar zu einem jeweiligen Teilbereich der Umgebung das SNR ablesen kann.

In einer vorteilhaften Ausgestaltung gibt die Information an, ob für den Teilbereich eine Störgeräuschunterdrückung des Hörgeräts aktiviert ist. Die Störgeräuschunterdrückung ist z.B. ein Teil der Steuereinheit des Hörgeräts und ist derart ausgebildet, dass diese in aktiviertem Zustand Störgeräusche im Eingangssignal unterdrückt. Die Störgeräuschunterdrückung ist insbesondere selektiv für ein oder mehrere Teilbereiche aktivierbar, sodass unterschiedliche Teilbereiche und darin befindliche Störgeräuschquellen unterschiedlich stark unterdrückbar sind. Das Bildelement zeigt nun an, ob für den jeweiligen Teilbereich die Störgeräuschunterdrückung aktiviert ist.

In einer zweckmäßigen Ausgestaltung gibt die Information nicht nur an, ob für den Teilbereich eine Störgeräuschunterdrückung aktiviert ist, sondern genauer, wie stark Störgeräusche aus dem Teilbereich von der Störgeräuschunterdrückung unterdrückt werden. Hierzu wird beispielsweise ein Dämpfungsfaktor als Textelement im Echtzeitbild angezeigt.

In einer vorteilhaften Ausgestaltung ist das Bildelement eine eingefärbte oder transparente Fläche oder beides, welche in dem Echtzeitbild mit dem Teilbereich überlagert wird, sodass dieser abhängig von der Information eingefärbt oder transparent dargestellt wird oder beides. Geeignet ist eine diskrete Darstellung, z.B. indem oberhalb eines Schwellwerts eine Einfärbung erfolgt und unterhalb des Schwellwerts nicht, oder eine kontinuierlich Darstellung, bei welcher z.B. die Einfärbung mit einer Farbstärke erfolgt, welche abhängig ist vom konkreten Wert der Information. Beispielsweise werden Teilbereiche der Umgebung mit geringem SNR auf dem Bildschirm grün eingefärbt und mit hohem SNR rot. Speziell bei der Einfärbung ganzer Flächen des Echtzeitbildes ist ein transparentes Bildelement zweckmäßig, um eine optimale Erkennbarkeit des dahinter liegenden Echtzeitbilds zu gewährleisten. Unter "transparent" wird insbesondere eine Transparenz <100% verstanden.

Die oben beschriebenen Ausgestaltungen befassen sich überwiegend mit Informationen, welche Umgebungsinformationen sind, d.h. Informationen, welche Eigenschaften der Umgebung sind und welche vom Hörgerät durch eine Analyse von Schallsignalen aus der Umgebung ermittelt werden. Bei Hörgerätinformationen ist eine solche Analyse der Umgebung zunächst nicht unbedingt erforderlich, vielmehr zielt eine Darstellung solcher Informationen darauf ab, dem Nutzer das Verhalten des Hörgeräts relativ zur Umgebung zu verdeutlichen. Besonders vorteilhaft ist die Darstellung einer Hörgerätinformation im Falle eines Hörgeräts, welches zum direktionalen Hören ausgebildet ist und hierzu ein Mikrofon aufweist, welches als Richtmikrofon ausgebildet ist, um Schallsignale aus einer bestimmten Richtung, d.h. aus einem bestimmten Teilbereich, gegenüber Schallsignalen aus anderen Richtungen, d.h. aus anderen Teilbereichen, hervorzuheben.

In einer vorteilhaften Ausgestaltung ist das Hörgerät zwischen einem ungerichteten und einem gerichteten Betriebsmodus umschaltbar. Im gerichteten Betriebsmodus zeigt das Bildelement an, welcher Teilbereich der Umgebung gegenüber der übrigen Umgebung hervorgehoben wird. Im ungerichteten Betriebsmodus wird dagegen kein Bildelement dargestellt oder das Bildelement zeigt an, dass kein Teilbereich der Umgebung hervorgehoben wird. Auf dem Bildschirm ist dann für den Nutzer unmittelbar erkennbar, ob das Hörgerät sich im ungerichteten Betriebsmodus (auch: omni-direktionaler Betrieb) befindet oder im gerichteten Betriebsmodus (auch: Richtbetrieb, z.B. monodirektionaler oder mehrdirektionaler Betrieb). In letzterem Fall ist dann für den Nutzer auch unmittelbar erkennbar, auf welchen Teilbereich oder auf welche Teilbereiche das Richtmikrofon gerichtet ist.

In einer vorteilhaften Ausgestaltung weist das Hörgerät ein Mikrofon auf, welches als Richtmikrofon ausgebildet ist, mit zumindest einer Richtkeule, welche auf den Teilbereich gerichtet ist und diesen abdeckt, sodass entsprechend Schallsignale aus diesem Teilbereich gegenüber Schallsignalen aus anderen Teilbereichen hervorgehoben werden. Die Information ist eine Abmessung, vorzugsweise eine Breite, oder eine Ausrichtung, vorzugsweise eine Richtung, der Richtkeule oder beides. Das Bildelement stellt die Richtkeule dar und zeigt dadurch in dem Echtzeitbild an, welcher Teilbereich der Umgebung von der Richtkeule abgedeckt wird und entsprechend aus welchem Teilbereich Schallsignale hervorgehoben werden. Das Bildelement ist vorzugsweise eine visuelle Repräsentation der Richtkeule, mit entsprechender Abmessung und/oder Ausrichtung. Geeignet ist aber beispielsweise auch eine einfache Linie oder eine andere Darstellung. Da die Richtkeule in der tatsächlichen Umgebung für den Nutzer nicht sichtbar ist, wird auf diese Weise dem Nutzer über den Bildschirm eine intuitive Darstellung der Richtkeule und deren Lage in der Umgebung angeboten, sodass der Nutzer unmittelbar und ohne weitere Anstrengung erkennen kann, wie die Richtkeule relativ zur Umgebung dimensioniert und/oder ausgerichtet ist und entsprechend, welche Teilbereiche der Umgebung und somit welche Schallquellen hiervon gegebenenfalls betroffen sind.

Bevorzugterweise ist der Bildschirm des Zusatzgeräts zugleich als ein Eingabegerät ausgebildet, mittels welchem ein oder mehrere Betriebsparameter des Hörgeräts einstellbar sind. Auf diese Weise ist auch eine besonders intuitive Bedienung realisiert, mit welcher das Hörgerät auf einfache Weise einstellbar ist. Die Auswirkungen einer jeweiligen Einstellung sind für den Nutzer unmittelbar anhand des Echtzeitbilds und der darübergelegten Information erkennbar. Beispielsweise sind die Abmessung oder die Ausrichtung der Richtkeule oder beide durch den Nutzer unmittelbar im Echtzeitbild einstellbar.

Ebenfalls geeignet ist eine Ausgestaltung, bei welcher alternativ oder zusätzlich zum Bildschirm als Eingabegerät das Zusatzgerät oder das Hörgerät ein oder mehrere Bedienelemente aufweisen, zum Einstellen eines oder mehrere Betriebsparameter des Hörgeräts. Die Auswirkungen einer Einstellung mittels dieser Bedienelemente sind dann für den Nutzer vorteilhaft unmittelbar auf dem Bildschirm erkennbar.

Zweckmäßig ist auch eine Ausgestaltung, bei welcher ein Avatar mit dem Echtzeitbild überlagert wird, um darin eine Position des Nutzers in der Umgebung anzuzeigen. Der Avatar ist demnach eine virtuelle Repräsentation des Nutzers auf dem Bildschirm und verortet somit den Nutzer innerhalb der erweiterten Realität. Sofern sich Nutzer und Kamera auf unterschiedlichen Seiten des Bildschirms befinden, stellt die Positionierung des Avatars entweder insbesondere lediglich eine Näherung dar, welche jedoch typischerweise ausreichend ist, falls das Zusatzgerät sich hinreichend nah am Hörgerät befindet, z.B. innerhalb eines Abstands von weniger als 0,5 m.

In einer vorteilhaften Ausgestaltung werden Schallsignale aus der Umgebung von dem Hörgerät aufgenommen und als Eingabesignale für ein Spiel verwendet, welches auf dem Zusatzgerät aktiv ist. Das Spiel dient beispielsweise zur Verdeutlichung oder Erläuterung einer Funktion des Hörgeräts oder realisiert ein Training im Umgang mit dem Hörgerät oder ein Hörtraining. Geeignet ist beispielsweise eine Ausgestaltung, bei welcher dem Nutzer im Rahmen des Spiels eine Aufgabe gestellt wird, welche er oder sie lösen soll, z.B. durch das eigene Verhalten und/oder mittels entsprechender Benutzung oder Bedienung des Hörgeräts. Ein beispielhaftes Spiel stellt dem Nutzer die Aufgabe, ein Gespräch zwischen zwei Personen derart zu moderieren, dass diese innerhalb einer Toleranz einen gleichen Gesprächsanteil am Gespräch haben. Für ein Hörtraining wird dem Nutzer beispielsweise die Aufgabe gestellt, eine bestimmte Geräuschsituation, z.B. ein Gespräch, oder einen bestimmten Geräuschtyp, z.B. einen Vogel, eine Person oder Livemusik, in der Umgebung ausfindig zu machen.

Ein erfindungsgemäßes Hörsystem ist ausgebildet zur Durchführung eines Verfahrens wie vorstehend beschrieben. Vorzugsweise weist das Hörsystem hierzu eine Steuereinheit auf. In der Steuereinheit ist das Verfahren insbesondere programmtechnisch oder schaltungstechnisch realisiert oder eine Kombination hiervon. Beispielswiese ist die Steuereinheit hierfür als ein Mikroprozessor oder als ein ASIC ausgebildet oder als eine Kombination hiervon. Die Steuereinheit ist zweckmäßigerweise auf das Hörgerät und das Zusatzgerät aufgeteilt. Grundsätzlich lassen sich die oben beschriebenen Verfahrensschritte weitgehend beliebig auf das Zusatzgerät und das Hörgerät aufteilen.

Das erfindungsgemäße Computerprogrammprodukt enthält ein ausführbares Programm, welches bei oder nach einer Installation auf einem Hörsystem wie oben beschrieben das Verfahren wie oben beschrieben automatisch ausführt. Das Programm wird entweder auf dem Hörgerät oder auf dem Zusatzgerät installiert oder beides. Besonders zweckmäßig ist eine Ausgestaltung, bei welcher das Computerprogrammprodukt eine App ist, zur Installation auf dem Zusatzgerät. Mittels der App empfängt das Zusatzgerät die Information vom Hörgerät und erzeugt aus dieser ein geeignetes Bildelement, welches dann mit dem Echtzeitbild von der Kamera überlagert wird, um auf dem Bildschirm eine erweiterte Realität darzustellen.

Nachfolgend werden Ausführungsbeispiele anhand einer Zeichnung näher erläutert. Darin zeigen jeweils schematisch:
- Fig. 1: einen Nutzer und ein Hörsystem,
- Fig. 2: das Hörsystem aus Fig. 1,
- Fig. 3: ein Zusatzgerät des Hörsystems aus Fig. 2, mit einem erweiterten Echtzeitbild,
- Fig. 4-10: jeweils das Zusatzgerät aus Fig. 3, mit einer Variante des erweiterten Echtzeitbilds,

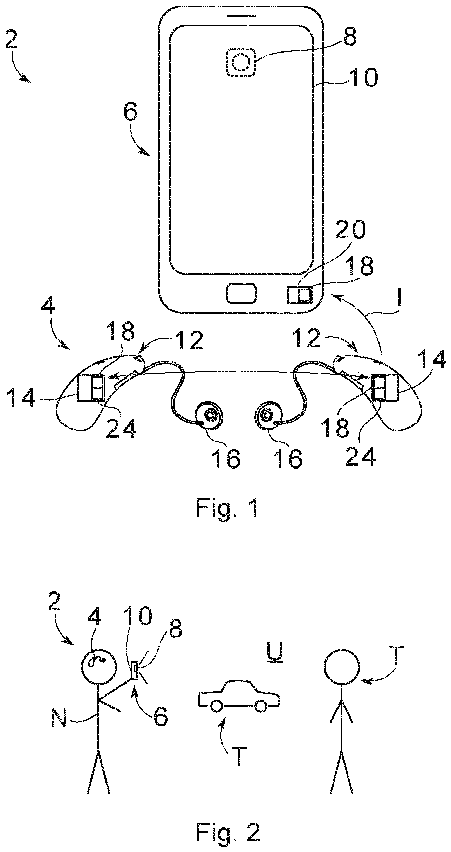

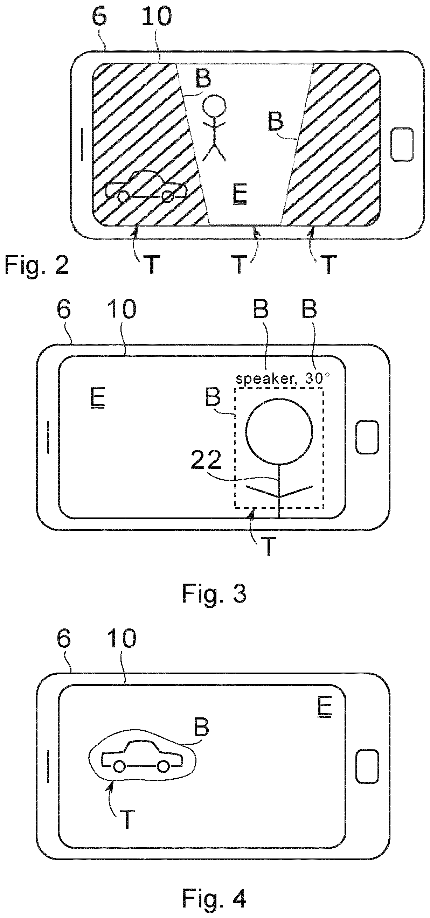

Anhand der Figuren werden nachfolgend ein Verfahren zum Betrieb eines Hörsystems 2 sowie ein solches Hörsystem 2 beschrieben. In Fig. 1 ist ein Ausführungsbeispiel für ein Hörsystem 2 gezeigt. Das Hörsystem 2 weist ein Hörgerät 4 auf, welches von einem Nutzer N getragen wird, beispielsweise wie in Fig. 2 gezeigt. Weiter weist das Hörsystem 2 ein Zusatzgerät 6 auf, welches eine Kamera 8 aufweist, mittels welcher von einer aktuellen Umgebung U ein Echtzeitbild E aufgenommen wird. Das Zusatzgerät 6 weist einen Bildschirm 10 auf, auf welchem das Echtzeitbild E ausgegeben wird, sodass die Umgebung U auf dem Bildschirm 10 dargestellt wird. In Fig. 2 ist das Zusatzgerät 6 von vorn gezeigt, sodass der Bildschirm 10 sichtbar ist, wohingegen sich die Kamera 8 auf einer Rückseite des Zusatzgeräts 6 befindet und daher gestrichen dargestellt ist.

Das Hörgerät 4 dient vorliegend zur Versorgung eines hörgeschädigten Nutzers N. Hierzu weist das Hörgerät 4 zumindest ein Mikrofon 12 auf, welches Schall aus der Umgebung U aufnimmt und ein elektrisches Eingangssignal erzeugt. Dieses wird zur Modifikation einer nicht explizit gezeigten Signalverarbeitung des Hörgeräts 4 zugeführt. Die Signalverarbeitung ist hier ein Teil einer Steuereinheit 14 des Hörgeräts 2. Die Signalverarbeitung gibt als Ergebnis ein elektrisches Ausgangssignal aus, welches dann über einen Hörer 16 des Hörgeräts 4 wieder in Schall umgewandelt wird und an den Nutzer N ausgegeben wird. Vorliegend ist das Hörgerät 4 sogar ein binaurales Hörgerät, mit zwei Einzelgeräten wie in Fig. 1 erkennbar, welche jeweils zumindest ein Mikrofon 12 und einen Hörer 16 aufweisen und welche vom Nutzer N auf unterschiedlichen Seiten des Kopfs getragen werden, nämlich einmal am oder im linken Ohr und einmal am oder im rechten Ohr.

Das Zusatzgerät 6 ist vorliegend ein einzelnes Gerät, in welchem die Kamera 8 und der Bildschirm 10 zusammengefasst sind. Hierzu ist das Zusatzgerät 6 speziell ein Smartphone. In einer nicht gezeigten Alternative weist das Zusatzgerät 6 die Kamera 8 und den Bildschirm 10 als zwei separate Geräte auf.

Zur Übermittlung der Information weisen das Hörgerät 4 und das Zusatzgerät 6 jeweils eine Schnittstelle 18 zur Datenübertragung auf, z.B. eine Bluetooth-Schnittstelle, und sind über diese Schnittstellen 18 miteinander verbunden oder gekoppelt. Bei der Datenübertragung wird dann zumindest die Information vom Hörgerät 4 zum Zusatzgerät 6 übertragen. Die Datenübertragung erfolgt z.B. von beiden Einzelgeräten jeweils zum Zusatzgerät 6 oder wie in Fig. 2 gezeigt von einem Einzelgerät zum anderen Einzelgerät und von diesem gesammelt zum Zusatzgerät 6. Die Information I stammt aber nicht zwingend von beiden Einzelgeräten, sondern kann je nach Art der Information I unter Umständen auch von lediglich einem der Einzelgeräte erzeugt werden.

In den gezeigten Ausführungsbeispielen wird auf dem Zusatzgerät 6 durch eine Verknüpfung der Umgebung U mit Informationen I, d.h. Daten, vom Hörgerät 4 einer erweiterten Realität (auch als "augmented reality" bezeichnet) erzeugt. Hierzu übermittelt das Hörgerät 4 an das Zusatzgerät 6 eine Information I, welche mit einem Teilbereich T der Umgebung U verknüpft ist und somit eine Information I zu diesem Teilbereich T ist. Die Information I wird dann auf dem Bildschirm 10 dargestellt, indem ein Bildelement B erzeugt wird und mit dem Echtzeitbild E derart überlagert wird, dass für den Nutzer N erkennbar ist, mit welchem Teilbereich T der Umgebung U die Information I verknüpft ist. Die Information I vom Hörgerät 4 wird somit als ein virtuelles Bild in ein Abbild der realen Umgebung U projiziert. Damit wird dem Nutzer N auf dem Bildschirm 10 die Beziehung zwischen der Umgebung U und den Informationen I vom Hörgerät 4 verdeutlicht und weiterhin wird

dem Nutzer N ein intuitiver Zugang zum Verständnis des Betriebs des Hörgeräts 4 ermöglicht.

Die Information I beschreibt hier allgemein eine Eigenschaft oder einen Aspekt des Teilbereichs T oder eines Objekts darin oder eine Einstellung des Hörgeräts 4 zur Interaktion mit dem Teilbereich T oder einem Objekt darin. Die Information I ist somit eine Umgebungs- oder Hörgerätinformation und gibt an, wie das Hörgerät 4 ein Schallsignal aus einem Teilbereich T der Umgebung U bewertet (Umgebungsinformation) oder verarbeitet (Hörgerätinformation). Die Information I ist z.B. ein konkreter Wert eines Betriebsparameters des Hörgeräts 4 und dann eine Hörgerätinformation oder ein Wert einer Eigenschaft eines Teilbereichs T der Umgebung U, speziell eines Schallsignals aus diesem Teilbereich T, und dann eine Umgebungsinformation.

Die Information I wird in bestimmter Weise auf dem Bildschirm 10 dargestellt, nämlich nicht einfach als bloßes Datum ohne Bezug zur Umgebung U, sondern als eine Überlagerung derart, dass die Information I im Echtzeitbild E visuell demjenigen Teilbereich T der Umgebung U zugeordnet ist, welcher mit der Information I verknüpft ist. Hierzu wird die Information I zur Darstellung in ein Bildelement B übersetzt, welches mit dem Echtzeitbild E überlagert wird, sodass auf dem Bildschirm 10 eine erweiterte Realität dargestellt wird, bei welcher das Echtzeitbild E die Realität ist und das Bildelement B, d.h. die Information I, eine Erweiterung dieser Realität ist. In diesem Sinne ist das Echtzeitbild E real, da dessen Elemente von der Kamera 8 erfasst werden, und das Bildelement B virtuell, da dieses nicht von der Kamera 8 erfasst wird, sondern zusätzlich erzeugt wird, vorliegend von einer Steuereinheit 20 des Zusatzgeräts 6.

Die Umgebung U ist üblicherweise in mehrere Teilbereiche T unterteilt, sodass entsprechend auch das Echtzeitbild E in mehrere Bildteile unterteilt, wobei jeder Bildteil einen Teilbereich T darstellt und umgekehrt, sodass in den Figuren die Bildteile der Einfachheit halber ebenfalls als Teilbereiche T markiert sind. Ein jeweiliger Teilbereich T ist beispielsweise ein Raumbereich, welcher von einem Objekt, z.B. einer Person, eingenommen wird, oder ein Winkel- oder Raumwinkelbereich, z.B. ist die Umgebung U ausgehend vom Nutzer N in mehrere Winkelbereiche unterteilt, oder der Teilbereich T ist ein sonstwie zumindest teilweise begrenzter Bereich der Umgebung U. Die genaue Abgrenzung des Teilbereichs T gegenüber der übrigen Umgebung U ist insbesondere abhängig von der Art der Information I.

Das Bildelement B ist beispielsweise eine Markierung, welche auf den Teilbereich T zeigt oder in oder an diesem angezeigt wird, z.B. ein Symbol, ein Icon, ein Pfeil, ein Kreuz, ein Kreis, eine Linie oder dergleichen. Alternativ ist das Bildelement B ein Textelement im oder am Teilbereich T, ein Rahmen um den Teilbereich T herum, eine Umrandung des Teilbereichs T, eine Färbung, Transparenz, Bildschärfe oder Kontrast desjenigen Teils des Echtzeitbildes E, welcher den Teilbereich T zeigt, oder Linien zum Markieren des Teilbereichs T. Möglich und geeignet sind auch Kombinationen der vorgenannten Ausgestaltungen. Verschiedene Beispiele für Bildelemente B sind in den Figuren gezeigt.

In einer möglichen Ausgestaltung wird eine relative Lage des Hörgeräts 4 und des Zusatzgeräts 6 zueinander bestimmt, um auf diese Weise die Verknüpfung der Information I mit dem Teilbereich T besonders genau wiedergeben zu können. Grundsätzlich ist aber auch eine Ausgestaltung möglich, bei welcher die relative Lage ohne zusätzliche Messung geschätzt wird. Beispielsweise wird bei einem Smartphone als Zusatzgerät 6 davon ausgegangen, dass der Nutzer N dieses wie in Fig. 2 gezeigt im Abstand weniger 10 cm vor sich und etwa auf Augenhöhe hält, sodass dann davon ausgegangen wird, dass sich das Zusatzgerät 6 z.B. 20 cm in Blickrichtung R vor dem Hörgerät 4 befindet. Für das Hörgerät 4 wird davon ausgegangen, dass dieses in oder an einem oder beiden Ohren des Nutzers N getragen wird, wie ebenfalls in Fig. 2 gezeigt.

In Fig. 3 ist eine Ausgestaltung gezeigt, bei welcher die Information I ein Vorhandensein einer Schallquelle 22 in dem Teilbereich T ist. Das Hörgerät 4 erkennt das Vorhandensein der Schallquelle 22 und übermittelt dies an das Zusatzgerät 6, zur Darstellung in dem Echtzeitbild E. In diesem markiert das Bildelement B dann den Teilbereich T, um in diesem das Vorhandensein der Schallquelle 22 anzuzeigen.

Dadurch ist für den Nutzer N auf dem Bildschirm B unmittelbar erkennbar, wo in der Umgebung U das Hörgerät 4 eine Schallquelle 22 erkennt. Im Ausführungsbeispiel der Fig. 3 erkennt das Hörgerät 4 zusätzlich auch die Position der Schallquelle relativ zum Hörgerät 4, also den Teilbereich T, in welchem sich die Schallquelle 22 befindet. Auch diese Position wird an das Zusatzgerät 6 übermittelt, sodass dieses das Vorhandensein an der entsprechenden Position im Echtzeitbild E anzeigt. Das Bildelement B zur Darstellung des Vorhandenseins der Schallquelle 22 ist in Fig. 3 beispielhaft ein Rahmen um die Schallquelle 22 herum.

Zusätzlich bestimmt das Hörgerät 4 im Ausführungsbeispiel der Fig. 3 auch eine Klasse der Schallquelle 22, d.h. welcher Art die Schallquelle 22 ist. Hierzu weist das Hörgerät 4 beispielsweise einen nicht explizit gezeigten Klassifikator auf, z.B. als Teil der Steuereinheit 14. Auch die Klasse ist eine Information I, welche an entsprechender Stelle im Echtzeitbild E angezeigt wird. Zur Darstellung der Klasse der Schallquelle 22 wird in Fig. 3 als Bildelement B ein Textelement verwendet, welches hier explizit die Klasse "speaker" (d.h. Gesprächspartner) angibt und am Rahmen angeordnet ist, sodass erkennbar ist, dass die Klasse zu der markierten Schallquelle 22 gehört.

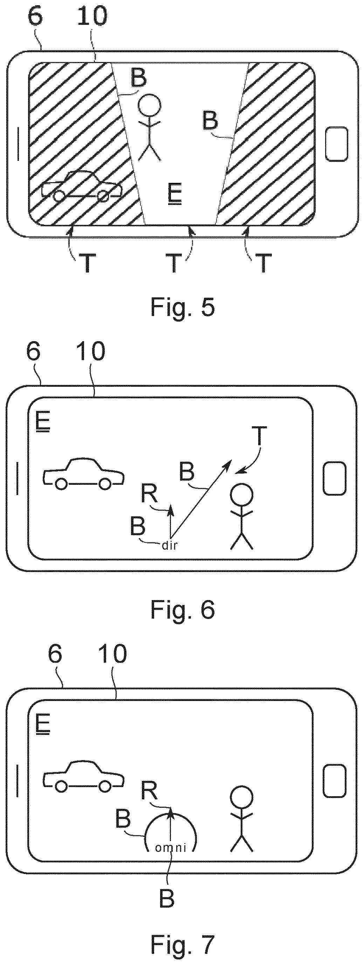

In Fig. 3 ist die Schallquelle 22 konkret ein Gesprächspartner des Nutzers N und wird als solcher im Echtzeitbild E mittels mehrerer Bildelemente B markiert. Dadurch ist über den Bildschirm 10 für den Nutzer N sofort erkennbar, wo das Hörgerät 4 in der Umgebung U einen Gesprächspartner identifiziert hat. Zusätzlich wird in Fig. 3 in dem Echtzeitbild E noch mit einem weiteren Bildelement B ein Winkel angezeigt, in welchem sich die Schallquelle 22 relativ zur Blickrichtung R des Nutzers N befindet. Vorliegend wird als ein Bildelement B der Winkel einfach als Zahl derart in der Nähe der Schallquelle 22 angezeigt, dass der Winkel für den Nutzer N möglichst eindeutig dieser Schallquelle 22 zugeordnet ist. Alternativ oder zusätzlich wird der Winkel in einer anderen Ausgestaltung als Paar von zwei Linien oder Pfeilen dargestellt, eine in Blickrichtung R und eine weitere vom Nutzer N zur Schallquelle 22 hin, vgl. z.B. Fig. 6.

In der in Fig. 4 gezeigten Ausgestaltung ist die Information I ein Signal-zu-Rauschverhältnis, kurz SNR, des Teilbereichs T. Das Hörgerät 4 misst das SNR in dem Teilbereich T, z.B. mittels einer Analyseeinheit als Teil der Steuereinheit 14. Das SNR wird dann als Information I zur Darstellung in dem Echtzeitbild E an das Zusatzgerät 6 übermittelt. Das Bildelement B gibt dann das SNR an, genauer gesagt das SNR für den Teilbereich T. Entsprechend wird das SNR jeweils separat für mehrere unterschiedliche Teilbereiche T gemessen und dadurch auf dem Bildschirm 10 dann dem Echtzeitbild E sozusagen eine SNR-Karte überlagert, sodass der Nutzer N unmittelbar zu einem jeweiligen Teilbereich T der Umgebung U das SNR ablesen kann. In Fig. 4 ist ein Teilbereich T erkennbar, welcher durch eine Fläche mit Umrandung als Bildelement B markiert ist. In dem Teilbereich T befindet sich ein Objekt, hier beispielhaft ein Fahrzeug, welches in dem Teilbereich T zu einem geringeren SNR als in der übrigen Umgebung U führt.

In Fig. 5 ist eine Ausgestaltung gezeigt, bei welcher die Information I angibt, ob für den Teilbereich T eine Störgeräuschunterdrückung 24 des Hörgeräts 4 aktiviert ist. Die Störgeräuschunterdrückung ist hier ein Teil der Steuereinheit 14 des Hörgeräts 4 und derart ausgebildet, dass diese in aktiviertem Zustand Störgeräusche im Eingangssignal unterdrückt. Die Störgeräuschunterdrückung 24 ist selektiv für ein oder mehrere Teilbereiche T aktivierbar, sodass unterschiedliche Teilbereiche T und darin befindliche Störgeräuschquellen unterschiedlich stark unterdrückbar sind. Das Bildelement B zeigt nun an, ob für den jeweiligen Teilbereich T die Störgeräuschunterdrückung aktiviert ist. In einer nicht explizit gezeigten Ausgestaltung gibt die Information I nicht nur an, ob für den Teilbereich T eine Störgeräuschunterdrückung 24 aktiviert ist, sondern genauer, wie stark Störgeräusche aus dem Teilbereich T von der Störgeräuschunterdrückung 24 unterdrückt werden.

In einer möglichen Ausgestaltung ist das Bildelement B eine eingefärbte oder transparente Fläche oder beides, welche in dem Echtzeitbild E mit dem Teilbereich T überlagert wird, sodass dieser abhängig von der Information I eingefärbt oder transparent dargestellt wird oder beides. Beispielsweise werden in Fig. 4 Teilbereiche T der Umgebung U mit geringem SNR auf dem Bildschirm 10 grün eingefärbt und mit hohem SNR rot, sodass dann der Teilbereich T mit dem Fahrzeug entsprechend rot gefärbt ist und der übrige Teil des Echtzeitbilds E grün gefärbt ist. Speziell bei einer solchen Einfärbung ganzer Flächen des Echtzeitbilds E ist ein transparentes Bildelement B zweckmäßig, um eine optimale Erkennbarkeit des dahinter liegenden Echtzeitbilds E zu gewährleisten. In Fig. 5 ist die Darstellung beispielsweise diskret derart, dass diejenigen Teilbereiche T, für welche die Störgeräuschunterdrückung aktiv ist, mit Bildelementen B überblendet werden, hier einer Farbe, welche in Fig. 5 als eine Schraffur dargestellt ist. Derjenige Teilbereich T, für welchen die Störgeräuschunterdrückung hingegen nicht aktiv ist, wird nicht mit einem Bildelement B überblendet.

Die bisher beschriebenen Ausgestaltungen befassen sich überwiegend mit Informationen I, welche Umgebungsinformationen sind, d.h. Informationen, welche Eigenschaften der Umgebung U sind und welche vom Hörgerät 4 durch eine Analyse von Schallsignalen aus der Umgebung U ermittelt werden. Bei Hörgerätinformationen ist eine solche Analyse der Umgebung U zunächst nicht unbedingt erforderlich, vielmehr zielt eine Darstellung solcher Informationen I darauf ab, dem Nutzer N das Verhalten des Hörgeräts 4 relativ zur Umgebung U zu verdeutlichen. Nachfolgend beschrieben ist die Darstellung einer Hörgerätinformation im Falle eines Hörgeräts 4, welches zum direktionalen Hören ausgebildet ist und hierzu ein Mikrofon 12 aufweist, welches als Richtmikrofon ausgebildet ist, um Schallsignale aus einer bestimmten Richtung, d.h. aus einem bestimmten Teilbereich T, gegenüber Schallsignalen aus anderen Richtungen, d.h. aus anderen Teilbereichen T, hervorzuheben.

Im Ausführungsbeispiel der Fig. 6 und 7 ist das Hörgerät 4 zwischen einem ungerichteten und einem gerichteten Betriebsmodus umschaltbar. Fig. 6 verdeutlicht, wie im gerichteten Betriebsmodus das Bildelement B anzeigt, welcher Teilbereich T der Umgebung U gegenüber der übrigen Umgebung U hervorgehoben wird. Im ungerichteten Betriebsmodus wird dagegen kein Bildelement dargestellt oder wie in Fig. 7 gezeigt zeigt das Bildelement B an, dass kein Teilbereich T der Umgebung U hervorgehoben wird. Auf dem Bildschirm 10 ist dann für den Nutzer N unmittelbar erkennbar, ob das Hörgerät 4 sich im ungerichteten Betriebsmodus (auch: omni-direktionaler Betrieb) befindet oder im gerichteten Betriebsmodus (auch: Richtbetrieb, z.B. monodirektionaler oder mehrdirektionaler Betrieb). In letzterem Fall ist dann für den Nutzer auch unmittelbar erkennbar, auf welchen Teilbereich T oder auf welche Teilbereiche T das Richtmikrofon gerichtet ist.

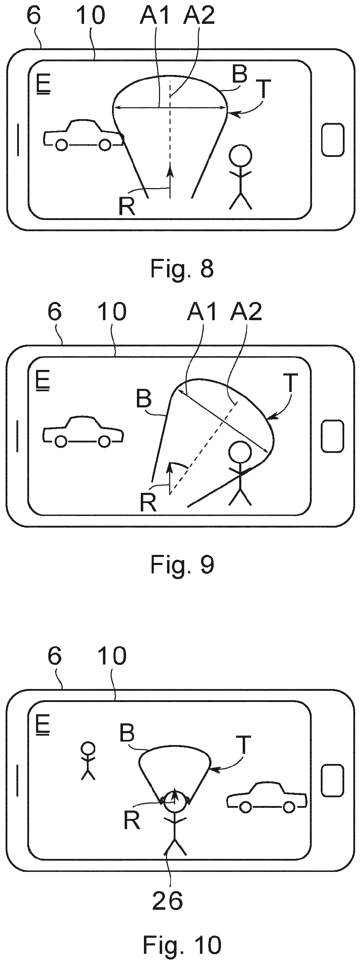

In einer Ausgestaltung weist das Hörgerät 4 ein Mikrofon 12 zumindest eine Richtkeule auf, welche auf einen Teilbereich T gerichtet ist und diesen abdeckt, sodass entsprechend Schallsignale aus diesem Teilbereich T gegenüber Schallsignalen aus anderen Teilbereichen T hervorgehoben werden. Die Information I ist dann z.B. eine Abmessung A1, hier eine Breite, du eine Ausrichtung A2, hier eine Richtung, der Richtkeule. Das Bildelement B stellt wie in den Fig. 8 und 9 gezeigt die Richtkeule dar und zeigt dadurch in dem Echtzeitbild E an, welcher Teilbereich T der Umgebung U von der Richtkeule abgedeckt wird und entsprechend aus welchem Teilbereich T Schallsignale hervorgehoben werden. Das Bildelement B ist hier eine visuelle Repräsentation der Richtkeule. Geeignet ist aber beispielsweise auch eine einfache Linie wie z.B. in Fig. 6 gezeigt oder eine andere Darstellung. Da die Richtkeule in der tatsächlichen Umgebung U für den Nutzer N nicht sichtbar ist, wird auf diese Weise dem Nutzer N über den Bildschirm 10 eine intuitive Darstellung der Richtkeule und deren Lage in der Umgebung U angeboten, sodass der Nutzer N unmittelbar und ohne weitere Anstrengung erkennen kann, wie die Richtkeule relativ zur Umgebung U dimensioniert und/oder ausgerichtet ist und entsprechend, welche Teilbereiche T der Umgebung U und somit welche Schallquellen hiervon gegebenenfalls betroffen sind.

In den Fig. 8 und 9 ist der Bildschirm 10 des Zusatzgeräts 6 zugleich als ein Eingabegerät ausgebildet, mittels welchem ein oder mehrere Betriebsparameter des Hörgeräts 4 einstellbar sind. Die Auswirkungen einer jeweiligen Einstellung sind für den Nutzer N unmittelbar anhand des Echtzeitbilds E und der darübergelegten Information I erkennbar. So sind in den Fig. 8 und 9 die Abmessung A1 und die Ausrichtung A2 der Richtkeule durch den Nutzer N unmittelbar im Echtzeitbild E einstellbar, sodass der Nutzer z.B. die in Fig. 8 in Blickrichtung R ausgerichtete Richtkeule einfach wie in Fig. 9 gezeigt in eine andere Richtung ausrichten kann.

In einer nicht explizit gezeigten Ausgestaltung weist alternativ oder zusätzlich zum Bildschirm 10 als Eingabegerät das Zusatzgerät 6 und/oder das Hörgerät 4 ein oder mehrere Bedienelemente auf, zum Einstellen eines oder mehrere Betriebsparameter des Hörgeräts 4. Die Auswirkungen einer Einstellung mittels dieser Bedienelemente sind dann für den Nutzer N unmittelbar auf dem Bildschirm 10 erkennbar.

In Fig. 10 ist eine Ausgestaltung gezeigt, bei welcher ein Avatar 26 mit dem Echtzeitbild E überlagert wird, um darin eine Position des Nutzers N in der Umgebung U anzuzeigen. Der Avatar 26 ist eine virtuelle Repräsentation des Nutzers N auf dem Bildschirm 10 und verortet somit den Nutzer N innerhalb der erweiterten Realität. Da sich im gezeigten Fall der Nutzer N und die Kamera 8 auf unterschiedlichen Seiten des Bildschirms 10 befinden, stellt die Positionierung des Avatars 26 lediglich eine Näherung dar, welche jedoch ausreichend ist, da das Zusatzgerät 6 sich hinreichend nah am Hörgerät 4 befindet.

In einer nicht explizit gezeigten Ausgestaltung werden Schallsignale aus der Umgebung U von dem Hörgerät 4 mittels zumindest eines Mikrofons 12 aufgenommen und als Eingabesignale für ein Spiel verwendet, welches auf dem Zusatzgerät 6 aktiv ist.

Das gezeigte Hörsystem 2 ist ausgebildet zur Durchführung eines Verfahrens wie vorstehend beschrieben. Das Hörsystem 2 weist hierzu eine Steuereinheit auf, welche wie in Fig. 1 erkennbar auf das Hörgerät 4 und das Zusatzgerät 6 aufgeteilt und aus deren Steuereinheiten 14, 20 gebildet ist. Grundsätzlich lassen sich die beschriebenen Verfahrensschritte weitgehend beliebig auf das Zusatzgerät 6 und das Hörgerät 4 aufteilen.

Die im Zusammenhang mit den Figuren beschriebenen Konzepte sind wie auch die diversen gezeigten Ausgestaltungen grundsätzlich unabhängig voneinander, sodass sich weitere Ausgestaltungen und Ausführungsbeispiele durch andere Kombinationen der beschriebenen Konzepte ergeben.

### Bezugszeichenliste

- 2: Hörsystem
- 4: Hörgerät
- 6: Zusatzgerät
- 8: Kamera
- 10: Bildschirm
- 12: Mikrofon
- 14: Steuereinheit (des Hörgeräts)
- 16: Hörer
- 18: Schnittstelle
- 20: Steuereinheit (des Zusatzgeräts)
- 22: Schallquelle
- 24: Störgeräuschunterdrückung
- 26: Avatar
- A1: Abmessung
- A2: Ausrichtung
- B: Bildelement
- E: Echtzeitbild
- I: Information
- N: Nutzer
- R: Blickrichtung
- T: Teilbereich
- U: Umgebung

## Patentansprüche

1. Verfahren zum Betrieb eines Hörsystems (2),
- wobei das Hörsystem (2) ein Hörgerät (4) aufweist, welches von einem Nutzer (N) getragen wird,
- wobei das Hörsystem (2) ein Zusatzgerät (6) aufweist, welches eine Kamera (8) aufweist, mittels welcher von einer aktuellen Umgebung (U) ein Echtzeitbild (E) aufgenommen wird,
- wobei das Zusatzgerät (6) einen Bildschirm (10) aufweist, auf welchem das Echtzeitbild (E) ausgegeben wird, sodass die Umgebung (U) auf dem Bildschirm (10) dargestellt wird,
- wobei das Hörgerät (4) an das Zusatzgerät (6) eine Information (I) übermittelt, welche mit einem Teilbereich (T) der Umgebung (U) verknüpft ist und somit eine Information (I) zu diesem Teilbereich (T) ist,
- wobei die Information (I) ebenfalls auf dem Bildschirm (10) dargestellt wird, indem ein Bildelement (B) erzeugt wird und mit dem Echtzeitbild (E) derart überlagert wird, dass für den Nutzer (N) erkennbar ist, mit welchem Teilbereich (T) der Umgebung (U) die Information (I) verknüpft ist.

2. Verfahren nach Anspruch 1,
wobei die Information (I) ein Vorhandensein einer Schallquelle (22) in dem Teilbereich (T) ist,
wobei das Hörgerät (4) das Vorhandensein der Schallquelle (22) erkennt,
wobei in dem Echtzeitbild (E) das Bildelement (B) den Teilbereich (T) markiert, um in diesem das Vorhandensein der Schallquelle (22) anzuzeigen.

3. Verfahren nach Anspruch 2,
wobei die Schallquelle (22) ein Gesprächspartner des Nutzers (N) ist und als solcher im Echtzeitbild (E) mittels des Bildelements (B) markiert wird.

4. Verfahren nach Anspruch 2 oder 3,
wobei in dem Echtzeitbild (E) ein Winkel angezeigt wird, in welchem sich die Schallquelle (22) relativ zur Blickrichtung (R) des Nutzers (N) befindet.

5. Verfahren nach einem der Ansprüche 1 bis 4,
wobei die Information (I) ein Signal-zu-Rauschverhältnis des Teilbereichs (T) ist,
wobei das Hörgerät (4) das Signal-zu-Rauschverhältnis in dem Teilbereich (T) misst,
wobei das Bildelement (B) das Signal-zu-Rauschverhältnis angibt.

6. Verfahren nach einem der Ansprüche 1 bis 5,
wobei die Information (I) angibt, ob für den Teilbereich (T) eine Störgeräuschunterdrückung (24) des Hörgeräts (4) aktiviert ist, sodass das Bildelement (B) anzeigt, ob für den Teilbereich (T) die Störgeräuschunterdrückung (24) aktiviert ist.

7. Verfahren nach einem der Ansprüche 1 bis 6,
wobei das Bildelement (B) eine eingefärbte oder transparente Fläche ist oder beides, welche in dem Echtzeitbild (E) mit dem Teilbereich (T) überlagert wird, sodass dieser abhängig von der Information (I) eingefärbt oder transparent dargestellt wird oder beides.

8. Verfahren nach einem der Ansprüche 1 bis 6,
wobei das Hörgerät (4) zwischen einem ungerichteten und einem gerichteten Betriebsmodus umschaltbar ist,
wobei im gerichteten Betriebsmodus das Bildelement (B) anzeigt, welcher Teilbereich (T) der Umgebung (U) gegenüber der übrigen Umgebung hervorgehoben wird,
wobei im ungerichteten Betriebsmodus kein Bildelement (B) dargestellt wird oder das Bildelement (B) anzeigt, dass kein Teilbereich (T) der Umgebung (U) hervorgehoben wird.

9. Verfahren nach einem der Ansprüche 1 bis 7,
wobei das Hörgerät (4) ein Mikrofon (12) aufweist, welches als Richtmikrofon ausgebildet ist, mit zumindest einer Richtkeule, welche auf den Teilbereich (T) gerichtet ist und diesen abdeckt,
wobei die Information (I) eine Abmessung (A1) oder eine Ausrichtung (A2) der Richtkeule ist oder beides,
wobei das Bildelement (B) die Richtkeule darstellt und dadurch in dem Echtzeitbild (E) anzeigt, welcher Teilbereich (T) der Umgebung (U) von der Richtkeule abgedeckt wird.

10. Verfahren nach einem der Ansprüche 1 bis 9,
wobei der Bildschirm (B) zugleich als ein Eingabegerät ausgebildet ist, mittels welchem ein oder mehrere Betriebsparameter des Hörgeräts (4) einstellbar sind.

11. Verfahren nach einem der Ansprüche 1 bis 10,
wobei ein Avatar (26) mit dem Echtzeitbild (E) überlagert wird, um darin eine Position des Nutzers (N) in der Umgebung (U) anzuzeigen.

12. Verfahren nach einem der Ansprüche 1 bis 11,
wobei Schallsignale aus der Umgebung (U) von dem Hörgerät (4) aufgenommen werden und als Eingabesignale für ein Spiel verwendet werden, welches auf dem Zusatzgerät (6) aktiv ist.

13. Verfahren nach einem der Ansprüche 1 bis 12,
wobei das Zusatzgerät (6) ein mobiles Endgerät ist, insbesondere ein Smartphone.

14. Hörsystem (2), welches ausgebildet ist zur Durchführung eines Verfahrens nach einem der Ansprüche 1 bis 13.

15. Computerprogrammprodukt, welches ein ausführbares Programm enthält, welches bei oder nach einer Installation auf einem Hörsystem (2) das Verfahren nach einem der Ansprüche 1 bis 13 automatisch ausführt.
